(19) Europäisches Patentamt

European Patent Office

Office européen des brevets

(11) **EP 0 999 547 A1**

(12) **EUROPEAN PATENT APPLICATION**

(43) Date of publication:
**10.05.2000 Bulletin 2000/19**

(51) Int. Cl.⁷: **G11B 20/00**, G11B 15/12,
G11B 19/02

(21) Application number: **99203658.2**

(22) Date of filing: **04.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **06.11.1998 US 187851**

(71) Applicant:
**Texas Instruments Incorporated
Dallas, Texas 75251 (US)**

(72) Inventors:
• **Lacombe, David
Mission Viejo, California 92691 (US)**
• **Chiou, Chii-Fa
Lake Forest, California 92630 (US)**

(74) Representative: **Holt, Michael
Texas Instruments Limited,
European Patents Department (MS 13),
PO Box 5069
Northampton NN4 7ZE (GB)**

(54) **Method and apparatus for active head mode control**

(57)     A circuit for communication between a first chip and a second chip includes a first circuit positioned on the first chip to transmit a first signal on a first terminal and a second signal on a second terminal, wherein said first circuit combines the first signal and the second signal in a combined signal and a second circuit positioned on the second chip to receive the combined signal, wherein the second circuit separates the first signal and the second signal from the combined signal.

FIG. 1

## Description

### FIELD OF THE INVENTION

The present invention is directed to write devices, and more particularly, the present invention is directed to mode control of an active head.

### BACKGROUND OF THE INVENTION

Disk drives are commonly used in work stations, personal computers, laptops and other computer systems to store large amounts of data in a form that can be made readily available to the user. In general, a disk drive includes a magnetic disk that is rotated by a spindle motor. The surface of the disk is divided into a series of data tracks. The data tracks are spaced radially from one another across a band having an inner diameter and an outer diameter. Each of the data tracks extends generally circumferentially around the disk and can store data in the form of magnetic transitions within the radial extent of the track on the disk surface. Typically, each data track is divided into a number of data sectors that can store fixed sized data blocks.

A head includes an interactive element, such as a magnetic transducer, that is used to sense the magnetic transitions to read data or that is used to conduct an electrical signal that causes a magnetic transition on the disk surface to write data.

The magnetic transducer is positioned with the active elements of the transducer at a position suitable for interaction with the magnetic transitions on the surface of the disk as the disk rotates. This positioning is performed with an actuator arm.

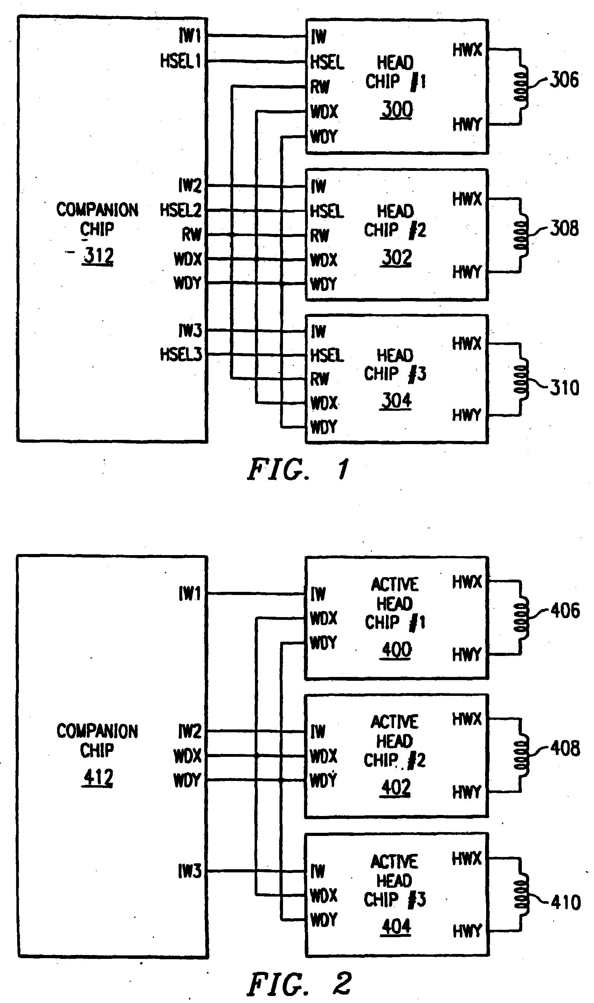

Furthermore, conductive traces or wires are routed along the actuator arm in order to provide electrical connection to components positioned along the arm. These wires are connected to a companion chip 312 such as illustrated in Figure 1. The companion chip 312 is connected to head chip 300, head chip 302 and head chip 304. The head chip 300, the head chip 302 and the head chip 304 receive signals from the companion chip. The head chip 300 is connected to head 306. The head chip 302 is connected to the head 308 while the head chip 304 is connected to the head 310. Each of the heads, namely 306, 308 and 310 writes and reads magnetic transitions from a different magnetic disk surface.

In order to adequately control any one of the heads, 306, 308 and 310, several signals are required. Typically as illustrated in Figure 1, these signals each have an individual wire that is dedicated for that signal. A description of the typical signals follows. The WDX and WDY signals (WDX/Y) are write data signals that indicate when magnetic transitions are to be written to the disk. The HWX and HWY signals (HWX/Y) transmit an electric current to the head when the WDX/Y signals are received. The HSEL signal is a head select (or enable) signal to select a particular active head chip and head. The RW signal provides an indication of read or write mode to the active head chip. The IW write current reference indicates the magnitude of the electric current transmitted to the head. The actuator arm available area for trace routing and component placement is extremely limited. Therefore, a need has arisen to reduce the trace routing area by decreasing the signal lines between the companion chip and active head chip. Additionally, reducing the number of signal lines may enable the active head chip and companion chip size to be decreased.

### SUMMARY OF THE INVENTION

The present invention reduces the number of input and output (I/O) pins and the number of distinct signals required between the companion chip and the active head chip. The signal reduction is particularly important when the active head chip is positioned close to the head. Thus, the die and trace routing area is reduced. Additionally, the present invention combines the function of some pins and/or signals to reduce the I/O pin count. Furthermore, the present invention combines the function of several signals to one signal to perform the functions of the several signals.

The present invention combines the function of the WDX/Y signals with the RW signal. The RW read/write mode control function is now accomplished by detecting the common mode voltage change of the WDX/Y signal. A detection circuit on the active head chip detects if the common mode voltage goes, for example, from 3.3 volts to 2.7 volts. Correspondingly, the active head chip will go from write mode to read mode. Also, the active head chip will go from a read to a write mode if the common mode voltage goes from 2.7 volts to 3.3 volts. The present invention uses a detection circuit, for example a comparator, which compares the common mode voltage with a threshold voltage. Once the common mode voltage is above or below the threshold voltage, the mode of the active head chip changes.

## BRIEF DESCRIPTION OF THE DRAWINGS

Figure 1 illustrates a companion chip with head chips and heads;
Figure 2 illustrates a companion chip with active head chip and heads; and
Figure 3 illustrates a circuit of the present invention.

## DETAILED DESCRIPTION OF THE PRESENT INVENTION

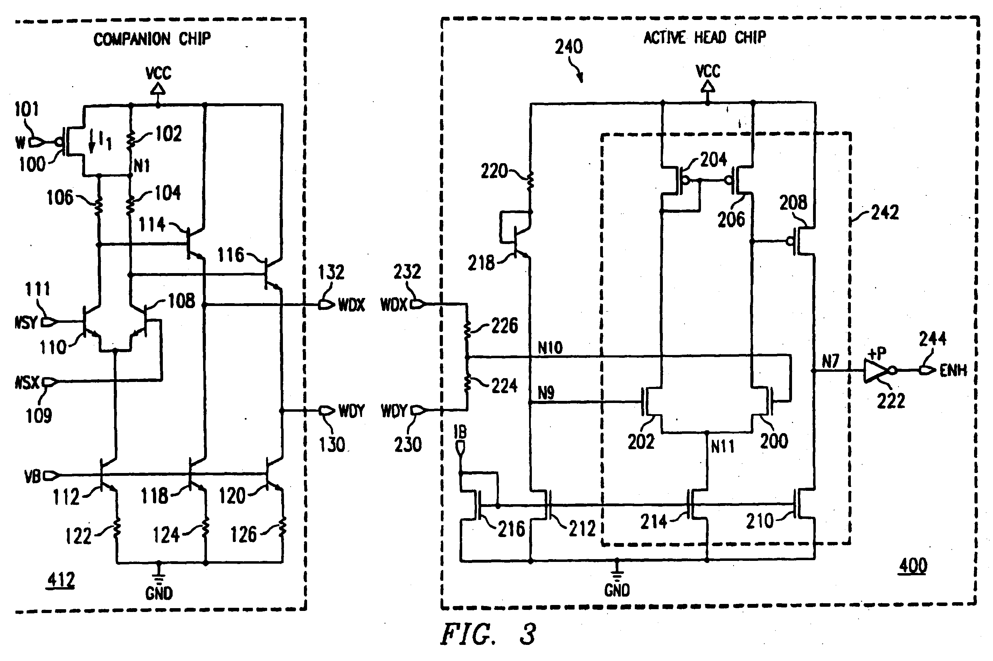

Figure 2 illustrates a companion chip 412 to integrate or combine the WDX/Y function with the RW function. This is achieved by integrating or combining the WDX/Y signal with the RW signal to form a composite signal to provide an indication of the PECL write data inputs as well as read or write mode control input signal. One signal performs the functions of two signals. The function of more than two signals can be performed by another similar signal. The read or write control signal places the active head chip, for example, in a read or write mode so that data can be read or written to the disk, respectively. The common mode voltage of the companion chip 412 is changed to reflect a command for a read or write mode to be sent to, either, the active head chip 400, active head chip 402 or the active head chip 404. The active head chip 400 will read from or write to head 406 when it receives a read or write command. Similarly, active head chip 402 will read from or write to head 408 when the active head chip receives the common mode voltage. Active head chip 404 and head 410 operate in a similar fashion. The common mode voltage of the companion chip 412 may vary between any two voltages but could vary from 3.3 to 2.7 volts to place either the active head chip 400, active head chip 402, or active head chip 403 into a read mode from a write mode. Conversely, the common mode voltage may be varied from 2.7 to 3.3 volts to place, either, the active head chip 400, the active head chip 402 or the active head chip 403 into a write mode from the read mode. The companion chip 412 selects the particular active head chip, either 400, 402 or 404 by a chip select signal. This chip select signal could be made by changing the magnitude of the IW pin current of the companion chip 412. In the alternative, the chip select signal could be through an additional wire and corresponding pin. It should be understood that any variation in common mode voltage could be used as the indication to switch between the read and write mode. Additionally, the companion chip 412 outputs an IW1 signal, an IW2 signal and an IW3 signal. Each of these signals, IW1, IW2 and IW3 is routed respectively to either the active chip 400, 402, or 404. For instance, the IW1 signal is input to active head chip 400 while the IW2 signal is input to the active head chip 402 with the IW3 signal input to the active head 404. These signals, IW1, IW2, and IW3, provide a write current reference input signal. For illustrative purposes, Figure 3 illustrates companion chip 412 with the active head chip 400. However, it is to be understood that the active head chip 400 could be replaced by the active head chip 402 or 404.

In Figure 3, an input terminal 101 to receive the RW signal to indicate the mode of the active head chip 400 is connected to the gate of PFET 100. The source of PFET 100 is connected to voltage $V_{CC}$. The drain of PFET 100 is connected to resistor 106 and resistor 104. A resistor 102 is connected between the source of PFET 100 and the drain of PFET 100. Terminal 111 receives the WSY signal and terminal 109 receives the WSX signal. Terminal 111 is connected to the base of transistor 110. A collector of transistor 110 is connected to resistor 106. An emitter of transistor 110 is connected to the emitter of transistor 108. A collector of transistor 108 is connected to resistor 104. Both emitters of transistor 110 and 108 are connected to the collector of transistor 112. An emitter of transistor 112 is connected to resistor 122. The other end of resistor 122 is connected to ground. Additionally, the collector of transistor 110 is connected to the base of transistor 114. The collector of transistor 114 is connected to voltage $V_{CC}$ while the emitter of transistor 114 is connected to the collector of transistor 118. The base of transistor 118 is connected to the base of transistor 112. The base of transistor 118 is additionally connected to the base of transistor 120. The emitter of transistor 118 is connected to resistor 124 while the other end of resistor 124 is connected to ground. The base of transistor 116 is connected to the collector of transistor 108 with the collector of transistor 116 being connected to voltage $V_{CC}$. The emitter of transistor 116 is connected to the collector of transistor 120. The emitter of transistor 120 is connected to resistor 126 with the other end of resistor 126 connected to ground. The terminal 130, which is connected to the emitter of transistor 116 and the collector of transistor 120 outputs the WDY signal biased with the common mode voltage, and the terminal 132, which is connected to the emitter of transistor 114 and to the collector of transistor 118 outputs the WDX signal again biased with the common mode voltage. These signals WDX and WDY are differential signals and include a common mode voltage in that the signals WDX and WDY are displaced by the common mode voltage. If a RW signal to indicate the mode, either a read or write, on the companion chip is received as a logical zero signal on terminal 101, the PFET 100 turns on and forms a conduction path through the source to the drain of the PFET 100. Current I flows through PFET100. With PFET 100 turned on, little current flows through resistor 102. The path of current I now depends on which transistor, either transistor 110 controlled by signal WSY or transistor 108 controlled by signal WSX is turned on to form a conduction path. The current I either flows through 1) resistor 106 and through the collector to emitter of transistor 110 if the WSY signal applied to terminal 111 is greater than the WSX signal applied to terminal 109 or through 2) resistor 104 and through the collector to emitter of transistor 108 if the WSX signal applied to terminal 109 is greater than the WSY signal applied to terminal 111. Thus, if a current path is formed through PFET 100, little current flows through resistor 108 and there is a small voltage drop across resistor 102. If PFET 100 is turned off, the current flows through resistor 102 resulting in a voltage drop equal to $I \times R_{102}$ where $R_{102}$ is the resistance of resistor 102. Additionally, another voltage drop is dependent on whether the current flows in resistor 106 or 104. Assuming transistor 108 is turned on, a voltage drop $I \times R_{104}$ forms across resistor 104 where $R_{104}$ is the resistance value of resistor 104. However, if transistor 108 is off and transistor 110 is turned on, the voltage drop across resistor 106 is $I \times R_{106}$ where $R_{106}$ is the resistance of resistor 106. Thus, if transistor 110 is turned on and PFET 100 is turned off, the voltage at terminal 132 is the voltage $V_{CC} - I \times R_{102} - I \times R_{106.} - V_{BE.}$. Correspondingly, if transistor 108 is turned on, and PFET 100 is turned off, the voltage at terminal 130 is $V_{CC} - I \times R_{102} - I \times R_{104} - V_{BE}$. In both cases, the equations have the term $I \times R_{102}$ which represents the change in the common mode voltage present at signals WDX and WDY. If PFET 100 is turned on, the term $I \times R_{102}$ is zero and the WDX signal and the WDY signal common mode voltage is increased by $I \times R_{102}$. The common mode voltage is equal to $V_{CC} - I \times R_{104} - V_{BE}$. The detector circuit 240 on active chip 400 detects the change in common mode voltage.

Turning now to the active head chip 400 and the detection circuit 240, the active head chip 400 includes two terminals 232 and 230 to receive the WDX signal at terminal 232 and the WDY signal at terminal 230. Terminal 232 is connected to resistor 226 which is connected to node N10. Terminal 230 is connected to resistor 224. Additionally, resistor 224 is connected to node N10. Node N10 is connected to gate of FET 200. The source of FET 200 is connected to terminal N11 while the drain of FET 200 is connected to the drain of PFET 206. The source of PFET 206 is connected to voltage $V_{CC}$. The source of FET 200 is connected to node N11 which in turn is connected to the source of FET 202. The gate of FET 202 is connected to node N9. The node N9 is connected to the emitter of transistor 218. The collector and the base of transistor 208 are connected together. The collector and base of transistor 218 is connected to resistor 220, which is connected to voltage $V_{CC}$. The drain of FET 202 is connected to the drain of PFET 204. The gate of PFET 204 is connected to the gate of PFET 206. Both of the gates of PFET 204 and PFET 206 are connected to the drain of PFET 204. The source of PFET 204 is connected to the voltage $V_{CC}$.

The respective sources of FET 216, FET 212, FET 214 and FET 210 are connected to ground. The drain of FET 210 is connected to the drain of PFET 208. The drain of FET 214 is connected to node N11. The drain of transistor 212 is connected to node N9. The drain of FET 216 is connected to the gate of transistor 216. The gate of FET 216 is connected to the gates of FET 212, FET 214, and FET 210. The drain of FET 210 is connected at node N7 to inverter 222, which is to buffer and invert the signal at node 7. Additionally, the drain of FET 210 is connected to the drain of PFET 208 with the source of PFET 208 being connected to voltage $V_{CC}$. The voltage at node N10 is the common mode voltage both of the signal WDX and WDY signal. Resistor 224 and resistor 226 form a summation circuit to sum the signal WDX and the signal WDY, since signals WDY and WDX are differential voltages. When signal WSY is more positive than signal WSX and PFET 100 is off, signal WDX is $V_{CC} - (I \times R_{102}) - (I \times R_{106}) - V_{BE}$ and signal WDY is $V_{CC} - (I \times R_{102}) - V_{BE}$. If resistor 226 is equal to resistor 224, the voltage at node N10 is equal to $\{[V_{CC} - (I \times R_{102}) - (I \times R_{106}) - V_{BE}] + [V_{CC} - (I \times R_{102}) - V_{BE}]\} / 2$. This equation simplifies to $V_{CC} - (I \times R_{102}) - V_{BE} - (I \times R_{106})/2$. The same equation is derived if signal WSX is more positive than signal WSY, and resistor 106 is equal to resistor 104. The node voltage N10 is dependent on the term $I \times R_{102}$. If PFET 100 is turned on, the term $I \times R_{102}$ is equal to zero because the current I flows through PFET 100 and not through resistor 102. This change ($I \times R_{102}$) in the common mode voltage is present at node N10. The common mode voltage at terminal N10 is input to the gate of FET 200. FET 200, FET 202, PFET 204, PFET 206, PFET 208, PFET 210 and PFET 214 form a comparator circuit 242. The output of the comparator circuit 242 is formed at node 7. The output of the comparator circuit 242 is input to inverter 222, which provides a buffer. The comparator circuit 242 compares the voltage at node N10 with the voltage at node N9. The voltage at node N9 is a threshold voltage which is 3.0 volts. This threshold voltage is set to detect the change of the common mode voltage. The comparator circuit 242 as a result of the comparison of the voltage at node N9 and the voltage at node N10 outputs an output signal at terminal 244 to provide an indication of the common mode voltage. More specifically, the comparator circuit 242 provides an indication of the RW signal without a direct connection for the RW signal between the companion chip 412 and the active head chip 400. If the common mode voltage of WDX and WDY have not been reduced by the voltage ($I \times R_{102}$), the voltage at node N10 exceeds the voltage at node N9, and the comparator circuit 242 outputs a logical 0. Likewise, if the common mode voltage of WDX and WDY has been reduced by the voltage ($I \times R_{102}$), the voltage at node N10 is lower than the voltage at node N9, and the comparator circuit 242 outputs a logical 1. This threshold voltage at node N9 is obtained by the voltage drop from $V_{CC}$ due to the resistor 220 and transistor 218. The above explanation may be applied equally to active head chip 402 and active head chip 404.

**Claims**

1.    A circuit for communication between a first chip and a second chip, comprising:

a first circuit positioned on the first chip to transmit a first signal on a first terminal and a second signal on a second terminal, wherein said first circuit combines said first signal and said second signal to form a combined signal;

a second circuit positioned on said second chip to receive said combined signal, wherein said second circuit separates said first signal and said second signal from said combined signal.

2. A circuit for communication between a first chip and a second chip as in Claim 1, wherein said first signal is a differential write data signal.

3. A circuit for communication between a first chip and a second chip as in Claim 1, wherein said second signal is a read/write (RW) mode control signal.

4. A circuit for communication between a first chip and a second chip as in Claim 1, wherein said first signal is a differential write data signal and the second signal is a read/write mode control signal.

5. A circuit for communication between a first chip and a second chip as in Claim 1, wherein said first and second chips are positioned on a disk system.

6. A circuit for communication between a first chip and a second chip as in Claim 1, wherein said second chip is an active head chip.

7. A method for communication between a first chip and a second chip, comprising the steps of:

positioning a first circuit on the first chip to transmit a first signal on a first terminal and a second signal on a second terminal, wherein said first circuit combines said first signal and said second signal to form a combined signal;

positioning a second circuit to receive said combined signal, wherein said second circuit separates said first signal and said second signal from said combined signal.

8. A method for communication between a first chip and a second chip as in Claim 7, wherein said first signal is a differential write data signal.

9. A method for communication between a first chip and a second chip as in Claim 7, wherein said second signal is a read/write mode control signal.

10. A method for communication between a first chip and a second chip as in Claim 7, wherein said first signal is a differential write data signal and the second signal is a read/write mode control signal.

11. A method for communication between a first chip and a second chip as in Claim 7, wherein said first and second chips are positioned on a head/arm assembly of a disk system.

12. A method for communication between a first chip and a second chip as in Claim 7, wherein said second chip is an active head chip.

13. A disk drive including a circuit, a circuit arrangement or implementing a method as claimed in any preceeding claim.

FIG. 1

FIG. 2

FIG. 3

ACTIVE HEAD CHIP

COMPANION CHIP

EP 0 999 547 A1

**European Patent Office**

## EUROPEAN SEARCH REPORT

Application Number

EP 99 20 3658

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 523 238 A (KEEL BEAT G ET AL) 11 June 1985 (1985-06-11) * abstract; figure 1 * * column 1, line 32 - column 2, line 8 * * column 3, line 11 - line 15 * * claim 1 * | 1-13 | G11B20/00 G11B15/12 G11B19/02 |
| A | PATENT ABSTRACTS OF JAPAN vol. 1997, no. 01, 31 January 1997 (1997-01-31) & JP 08 249630 A (HITACHI LTD), 27 September 1996 (1996-09-27) * abstract * | 1-13 | |
| A | DE 38 16 097 A (THOMSON BRANDT GMBH) 23 November 1989 (1989-11-23) * the whole document * | 1,3,5-7, 9,11-13 | |
| A | EP 0 504 570 A (TANDBERG DATA) 23 September 1992 (1992-09-23) * abstract * * column 3, line 27 - column 4, line 28 * * column 7, line 28 - column 9, line 32 * * figures 1,2 * | 1,5-7, 11-13 | TECHNICAL FIELDS SEARCHED (Int.Cl.7) G11B |
| A | US 5 191 489 A (ISOZAKI MASAAKI) 2 March 1993 (1993-03-02) * abstract * * column 3, line 50 - column 4, line 45 * * column 2, line 66 - column 3, line 20 * | 1,7,13 | |
| A | US 3 987 490 A (O'DAY RICHARD LEWIS ET AL) 19 October 1976 (1976-10-19) * abstract; figure 2 * * column 4, line 62 - column 5, line 7 * * claims 1-4 * | 1,5,7, 11,13 | |

-/--

The present search report has been drawn up for all claims

| Place of search | Date of completion of the search | Examiner |
|---|---|---|
| THE HAGUE | 21 December 1999 | Schiwy-Rausch, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 99 20 3658

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 3 673 349 A (BERG PETER ET AL) 27 June 1972 (1972-06-27) ----- | | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 21 December 1999 | Schiwy-Rausch, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 0 999 547 A1

## ANNEX TO THE EUROPEAN SEARCH REPORT
## ON EUROPEAN PATENT APPLICATION NO.

EP 99 20 3658

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-1999

| Patent document cited in search report | | Publication date | Patent family member(s) | | Publication date |
|---|---|---|---|---|---|
| US 4523238 | A | 11-06-1985 | AU | 558325 B | 29-01-1987 |
| | | | AU | 2117883 A | 23-08-1984 |
| | | | CA | 1205906 A | 10-06-1986 |
| | | | DE | 3338992 A | 16-08-1984 |
| | | | FR | 2541028 A | 17-08-1984 |
| | | | GB | 2136189 A,B | 12-09-1984 |
| | | | JP | 59152511 A | 31-08-1984 |
| JP 08249630 | A | 27-09-1996 | NONE | | |
| DE 3816097 | A | 23-11-1989 | NONE | | |
| EP 0504570 | A | 23-09-1992 | DE | 4109589 A | 24-09-1992 |
| | | | JP | 2809290 B | 08-10-1998 |
| | | | JP | 5073809 A | 26-03-1993 |
| | | | US | 5293278 A | 08-03-1994 |
| US 5191489 | A | 02-03-1993 | JP | 2064902 A | 05-03-1990 |
| | | | JP | 2623751 B | 25-06-1997 |
| | | | DE | 3928756 A | 01-03-1990 |
| | | | FR | 2635905 A | 02-03-1990 |
| | | | GB | 2223347 A,B | 04-04-1990 |
| | | | KR | 135523 B | 22-04-1998 |
| US 3987490 | A | 19-10-1976 | DE | 2601449 A | 16-09-1976 |
| | | | FR | 2303329 A | 01-10-1976 |
| | | | GB | 1519074 A | 26-07-1978 |
| | | | JP | 51110316 A | 29-09-1976 |
| US 3673349 | A | 27-06-1972 | NONE | | |

EPO FORM P0459

For more details about this annex : see Official Journal of the European Patent Office. No. 12/82

10